(19) Europäisches Patentamt
European Patent Office
Office européen des brevets

(11) **EP 2 823 868 A1**

(12) **DEMANDE DE BREVET EUROPEEN**

(43) Date de publication:
**14.01.2015 Bulletin 2015/03**

(51) Int Cl.:
*A63G 25/00* (2006.01)     *A63G 31/16* (2006.01)

(21) Numéro de dépôt: **13305980.8**

(22) Date de dépôt: **09.07.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeurs:
• **Thomson Licensing**
  **92130 Issy-les-Moulineaux (FR)**
• **INRIA - Institut National de Recherche en Informatique et en Automatique**
  **78150 Le Chesnay (FR)**

(72) Inventeurs:
• **Daniau, Fabien**
  **35576 Cesson-Sévigné (FR)**

• **Fleureau, Julien**
  **35576 Cesson-Sévigné (FR)**
• **Guillotel, Philippe**
  **35576 Cesson-Sévigné (FR)**
• **Mollet, Nicolas**
  **35576 Cesson-Sévigné (FR)**
• **Lecuyer, Anatole**
  **35042 RENNES (FR)**
• **Christie, Marc**
  **35042 Rennes (FR)**

(74) Mandataire: **Perrot, Sébastien**
**Technicolor R&D France Snc**
**975, avenue des Champs Blancs**
**CS 17616**
**35576 Cesson-Sévigné Cedex (FR)**

(54) **Procédé de reproduction d'un contenu audiovisuel doté de paramètres de commandes d'actuateurs haptiques et dispositif mettant en oeuvre le procédé**

(57) L'invention concerne un procédé de reproduction d'un contenu vidéo filmé à partir d'une caméra. Un contenu vidéo composé de séquences est élaboré et enrichi par les commandes appliquées à la caméra au moment du tournage. En vue de la reproduction, le contenu vidéo est découpé en séquences. Les commandes appliquées à la caméra sont extraites pour chaque séquence et permettent de calculer au moins un paramètre de commandes d'actuateurs haptiques associé à cette séquence. Au moment de la reproduction d'une séquence du contenu vidéo, au moins un paramètre de commandes ainsi calculé commande au moins un actuateur haptique. De cette façon, le spectateur perçoit des stimuli permettant d'enrichir sa perception du document vidéo au cours de la reproduction. Avantageusement, le lecteur apte à reproduire le contenu enrichi détermine un effet cinématographique pour un ensemble de séquences à partir des commandes appliquées à la caméra. Puis la métaphore haptique associée à cet effet est appliquée à cet ensemble de séquences.

Fig. 2

EP 2 823 868 A1

**Description**

**1. Domaine de l'invention**

Le domaine de la présente invention est celui de la génération de rendus haptiques lors de la reproduction d'un contenu audiovisuel. Plus précisément, l'invention concerne le cas où le contenu audiovisuel comporte des signaux permettant de commander des actuateurs générant des mouvements sur le corps du spectateur.

**2. Art antérieur**

De nos jours, les techniques cinématographiques permettent d'enrichir le contenu audiovisuel et le ressenti du spectateur. L'avènement de la 3D offre au spectateur une véritable immersion dans le film qui devient ainsi de plus en plus réaliste et prégnant. Récemment, des équipements sont rajoutés au siège sur lequel est assis le spectateur pour lui donner d'autres sensations qui celles apportées par sa seule vue. Ainsi, les sièges peuvent maintenant bouger selon plusieurs axes de liberté provoquant chez le spectateur un mouvement qui est en rapport avec le contenu visuel et éventuellement audio. Par exemple, dans le cas d'un film tourné à l'avant d'une nacelle de montagnes russes, lorsqu'une descente est reproduite sur l'écran du cinéma, le siège du spectateur bascule légèrement en avant. Un autre exemple consiste à faire vibrer fortement de gauche à droite les sièges du cinéma lors de la reproduction d'une scène de tremblements de terre.

Les contenus audiovisuels avec enrichissement haptique permettent de commander des actuateurs qui font bouger le spectateur lors de la reproduction du document. De cette façon, le spectateur prend connaissance du contenu non seulement par la vue et l'ouïe, mais aussi par le toucher. Son immersion dans la reproduction du document est alors plus grande et son impression de vivre l'événement plus intense.

La plupart du temps, les enrichissements haptiques sont rajoutés pour des films déjà réalisés. Un opérateur visualise le film et détermine une séquence dont la perception serait renforcée pour le spectateur par un mouvement effectué sur sa personne. L'opérateur détermine manuellement le type de mouvement (déplacement, vibration, battements, trépidation,...) et programme l'activation d'actuateurs spécifiques pendant cette séquence. Les paramètres haptiques sont rajoutés aux signaux vidéos et éventuellement audios sur un support spécifique. Lors de la reproduction, les paramètres haptiques sont lus et transmis aux actuateurs chargés d'appliquer des stimuli au spectateur. Ces stimuli peuvent générer toutes sortes de sensations : bien-être, angoisse, assurance, petitesse, vertige, etc.

Actuellement, ces paramètres haptiques sont calculés manuellement par un opérateur visualisant le contenu vidéo ou audiovisuel. Il existe donc un réel besoin pour une nouvelle technique permettant d'automatiser la création de paramètres de commandes d'actuateurs haptiques et l'enrichissement des nouveaux contenus vidéos.

**3. Exposé de l'invention**

L'invention propose une solution nouvelle qui ne présente pas l'ensemble de ces inconvénients de l'art antérieur, sous la forme d'un procédé de reproduction d'un contenu vidéo filmé à partir d'une caméra. Ce procédé comporte une étape de traitement des commandes appliquées à la caméra lors du tournage de une ou plusieurs séquences afin de calculer au moins un paramètre de commandes d'au moins un actuateur haptique associé à la ou les séquences et une étape de contrôle du au moins un actuateur haptique à partir du au moins un paramètre de commandes calculé pendant la reproduction de la au moins une séquence.

De cette manière, le contenu vidéo est automatiquement enrichi de paramètres de commandes d'actuateurs haptiques calculés à partir des commandes appliquées à la caméra lors du tournage de la ou les diverses séquences du contenu vidéo.

Selon un premier mode de réalisation, les valeurs numériques des commandes appliquées à la caméra produisent des valeurs numériques commandant les actuateurs haptiques. De cette manière, l'action des actuateurs est parfaitement adaptée au contenu vidéo qui est reproduit en même temps.

Selon un autre mode de réalisation, un effet cinématographique est déterminé à partir des commandes appliquées à la caméra, et le paramètre de commandes d'actuateurs haptiques est calculé à partir de l'effet cinématographique ainsi déterminé. De cette manière, l'action des actuateurs sur le spectateur est bien adaptée à l'effet cinématographique que le réalisateur a voulu donner dans le contenu vidéo.

Selon un autre mode de réalisation, le contenu vidéo et des valeurs de commandes appliquées à la caméra sont transmis au cours des séquences vers un dispositif de reproduction de contenu vidéo et de commande d'actuateurs haptiques, l'étape de traitement pour calculer les paramètres de commandes d'actuateurs haptiques étant exécutée par ce dispositif. De cette manière, les paramètres de commandes des actuateurs sont bien adaptés à l'installation utilisée pour la reproduction du contenu.

Selon un autre mode de réalisation, le contenu vidéo et des paramètres de commandes d'actuateurs haptiques sont transmis vers un dispositif de reproduction de contenu vidéo et de commande d'actuateurs haptiques. De cette manière, les paramètres de commandes d'actuateurs sont calculés une seule fois par le réalisateur du document.

Selon un autre mode de réalisation, une pluralité de groupes de paramètres de commandes d'actuateurs haptiques sont associés à chaque séquence du contenu, chaque groupe de paramètres étant associé à un dispositif de reproduction de contenu vidéo et d'actuateurs haptiques particuliers. De cette manière, l'installation utilisée pour la reproduction du contenu choisit les paramètres de commandes en fonction des actuateurs haptiques disponibles.

Selon un autre mode de réalisation, la durée d'une séquence est un multiple de la durée de reproduction d'une image du contenu vidéo. De cette manière, le découpage temporel du contenu au cours duquel un paramètre de commande haptique est calculé est plus simple.

Selon un autre mode de réalisation, les actuateurs sont au nombre de trois, deux actuateurs destinés à être empoignés dans chaque main par un spectateur, et un actuateur destiné à supporter la tête dudit spectateur. De cette manière, l'installation de reproduction vidéo avec un retour haptique est facile à installer et relativement peu coûteuse.

Selon un autre mode de réalisation, si aucun effet cinématographique n'est détecté au cours d'une séquence, alors les paramètres de commandes d'actuateurs haptiques associés à cette séquence sont calculés à partir des valeurs de commandes appliquées à la caméra lors du tournage de cette séquence. De cette manière, le spectateur perçoit des sensations haptiques même en l'absence d'effets cinématographiques détectables.

Selon un premier aspect matériel, l'invention concerne également un dispositif de reproduction d'au moins une séquence d'un contenu vidéo filmé à partir d'une caméra, le dispositif comprenant au moins un processeur configuré pour traiter des commandes appliquées à la caméra lors du tournage de la au moins une séquence afin de calculer au moins un paramètre de commandes d'au moins un actuateur haptique associé à la au moins une séquence et pour contrôler le au moins un actuateur haptique à partir du au moins un paramètre de commandes calculé pendant la reproduction de la au moins une séquence.

Selon un mode de réalisation particulier, le au moins un processeur est en outre configuré pour déterminer un effet cinématographique à partir des commandes appliquées à la caméra, le paramètre de commandes du au moins un actuateur haptique étant calculé à partir de l'effet cinématographique déterminé.

De manière avantageuse, le au moins processeur est configuré pour contrôler trois actuateurs haptiques, deux actuateurs étant destinés à être empoignés dans chaque main par un spectateur, et un actuateur étant destiné à supporter la tête dudit spectateur.

Selon un autre aspect, l'invention concerne également un programme d'ordinateur comportant des instructions pour la mise en oeuvre du procédé de reproduction de contenu vidéo décrit ci-dessus, lorsque le programme est exécuté par un processeur.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la **figure 1** présente un exemple d'ordinogramme des étapes pour la mise en oeuvre du procédé selon un exemple de mise en oeuvre de l'invention,
- la **figure 2** présente un schéma d'un exemple de dispositif de reproduction de contenus vidéos et de commande d'actuateurs haptiques,
- les **figures 3.a et 3.b** montrent un exemple d'un siège occupé ou non par un spectateur et doté d'actuateurs haptiques,
- les **figures 4.a, 4.b et 4.c** présentent un schéma d'actuateurs et montrent les différents degrés de liberté disponibles,
- la **figure 5** montre un schéma d'un spectateur assis sur un siège muni d'actuateurs selon un exemple de réalisation de l'invention,
- la **figure 6** présente un schéma d'une caméra et des exemples de mouvements que l'on peut lui appliquer lors d'un tournage.
- la **figure 7** illustre un mouvement de l'actuateur haptique lors d'une séquence dans laquelle la caméra effectue une rotation.
- La **figure 8** illustre un dispositif configuré pour la commande d'actuateurs haptiques selon un exemple de mise en oeuvre particulier de l'invention.

**5. Description d'un mode de réalisation de l'invention**

*5.1 Principe général*

Le principe général de l'invention réside dans un procédé de reproduction d'un contenu vidéo filmé à partir d'une caméra. Un contenu vidéo composé de une ou plusieurs séquences est élaboré et enrichi par les commandes appliquées à la caméra au moment du tournage. Les commandes appliquées à la caméra sont extraites pour chaque séquence et permettent de calculer au moins un paramètre de commandes d'un ou plusieurs actuateurs haptiques associé à cette séquence. Lorsque les commandes appliquées à la caméra ne peuvent pas être extraites de la ou les séquences vidéos, ces commandes sont estimées à partir de la ou les séquences vidéos, tel que décrit par exemple dans l'article de Thomas G A intitulé « Sports Real-Time Camera Pose Estimation for Augmenting Scenes » et publié en février 2006 lors de la Conférence CVMP (« Conférence on Visual Media Production ») à Londres. Au moment de la reproduction d'une séquence du contenu vidéo, au moins un paramètre de commandes ainsi calculé commande au moins un actuateur haptique. De cette façon, le spectateur perçoit des stimuli permettant d'enrichir sa perception du document vidéo au cours de la reproduction.

Avantageusement, le lecteur apte à reproduire le contenu enrichi détermine un effet cinématographique pour un ensemble de séquences à partir des commandes appliquées à la caméra. Puis la métaphore haptique associée à cet effet est appliquée à cet ensemble de séquences.

*5.2 Description générale d'un mode de réalisation*

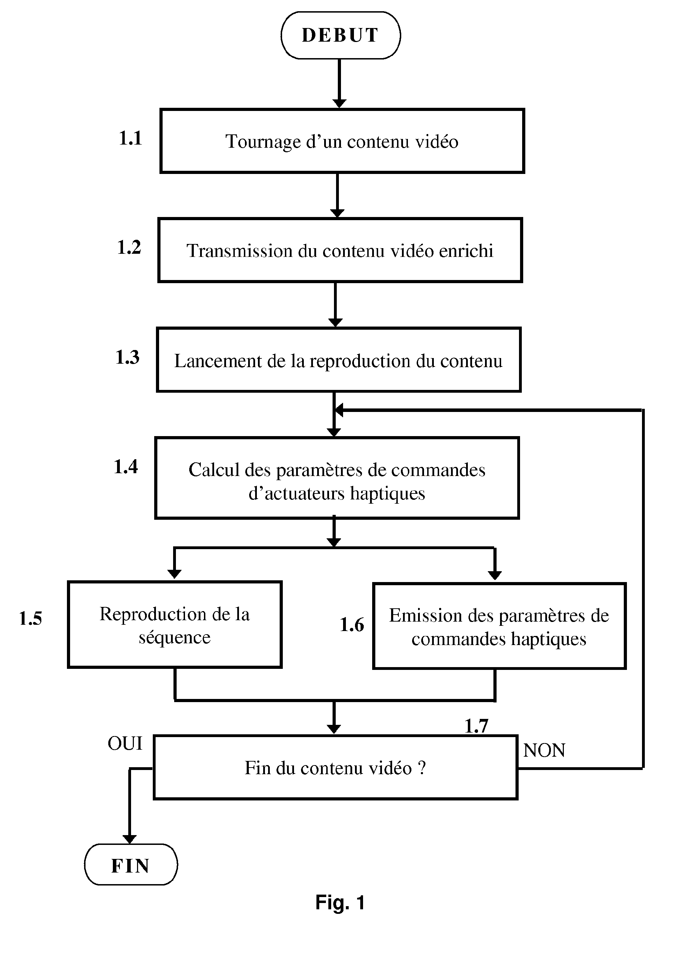

La figure 1 présente un exemple d'ordinogramme des étapes pour la mise en oeuvre du procédé selon l'invention.

Dans un premier temps, à l'étape 1.1, un contenu vidéo ou audiovisuel est filmé. Les commandes appliquées à la caméra tout au long du tournage sont enregistrées et chaque groupe de commandes appliquées à une séquence d'images données est associé à cette séquence. Le contenu constitué de données vidéo, de commandes de caméra et éventuellement de données audio est transmis à un lieu où il est reproduit (étape 1.2). A l'étape 1.3, un utilisateur déclenche la reproduction du contenu. Au cours de la reproduction et pour chaque séquence, les commandes appliquées à la caméra sont traitées afin de calculer au moins un paramètre de commandes d'actuateurs haptiques associé à cette séquence (étape 1.4). De façon concomitante, une séquence du contenu vidéo est reproduite (1.5) et au moins un paramètre de commandes ainsi calculé commande au moins un actuateur haptique au cours de la reproduction de cette séquence associée (1.6).

A l'étape 1.7, la fin du document est testé. S'il reste d'autres séquences à reproduire, le programme boucle à l'étape 1.4.

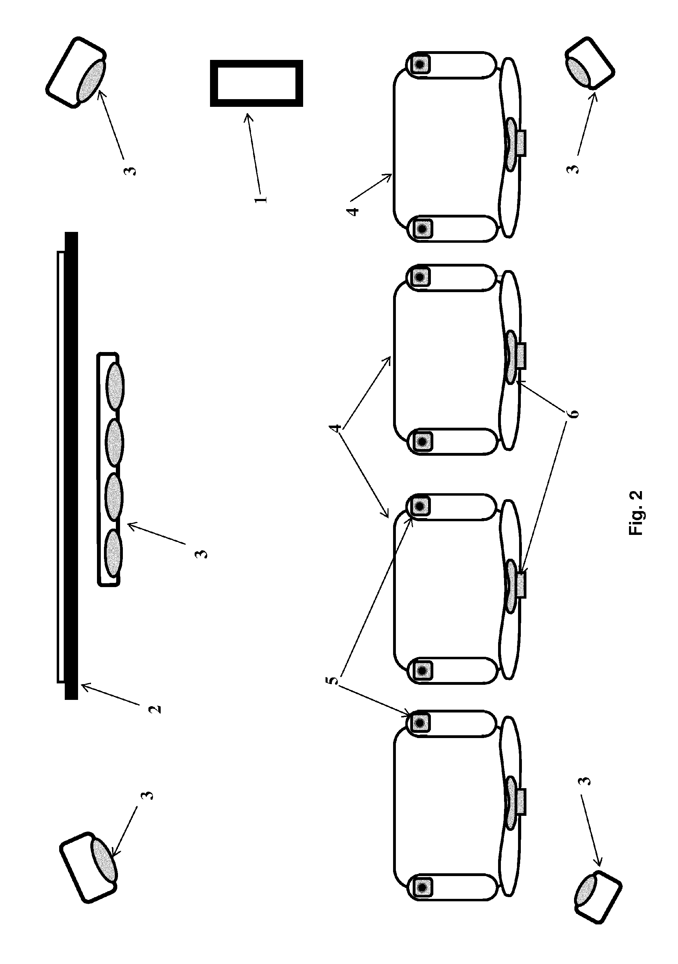

La **figure 2** présente un schéma d'un dispositif de reproduction de contenus vidéos et de commandes d'actuateurs haptiques. Ce dispositif est généralement installé dans une pièce dédiée à la reproduction de tels contenus, tel qu'un cinéma par exemple, mais l'invention couvre également le cas d'installation domestique recevant des contenus audiovisuels enrichis de paramètres destinés à commander des actuateurs haptiques. Selon un mode préféré de réalisation, un tel dispositif comporte :

- un lecteur 1 de contenus audiovisuels enrichis, ce lecteur peut lire des DVD ou Blue Ray, ou contenir un disque dur dans lequel de tels contenus sont téléchargés,
- un écran de reproduction 2 qui peut être un écran plat, ou un vidéoprojecteur projetant des images sur un écran,
- au moins un moyen de reproduction sonore 3, typiquement des enceintes acoustiques disséminés dans la pièce,
- au moins un siège haptique 4 disposé face à l'écran 2, ce siège comportant deux actuateurs de main 5 et un actuateur de tête 6.

Le lecteur 1 traite les données du contenu vidéo, et calcule les signaux à envoyer à l'écran de reproduction 2, aux enceintes acoustiques 3, et à l'ensemble des sièges haptiques 4. La transmission des données peut s'effectuer par des câbles reliant ces différents éléments ou par ondes radios. Le rendu haptique selon la présente invention consiste à convertir les commandes qui ont été appliquées à la caméra lors du tournage du contenu, en paramètres de commandes pour contrôler les actuateurs haptiques. Ces actuateurs provoquent un mouvement à une partie du corps d'un spectateur ou génèrent une sensation tactile. La perception du contenu qui est apportée par ce que le spectateur voit et entend, est enrichie par ce que le spectateur perçoit à travers son corps.

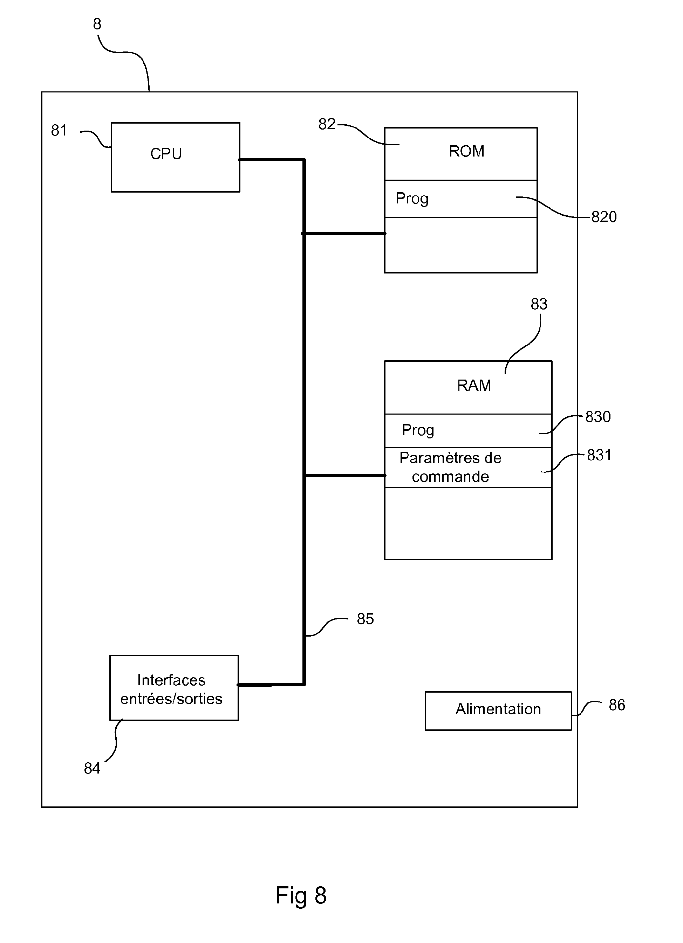

La **figure 8** illustre schématiquement un exemple de réalisation matérielle d'un dispositif 8 configuré pour la reproduction d'une ou plusieurs séquences vidéos ainsi que pour le contrôle du ou des dispositifs haptiques de la figure 2. Le dispositif 8 correspondant par exemple à un ordinateur personnel PC, à un ordinateur portable (de l'anglais « laptop »), à un récepteur/décodeur (ou en anglais « set-top box ») ou à un module de traitement d'image embarqué ou non dans un dispositif d'affichage.

Le dispositif 8 comprend les éléments suivants, reliés entre eux par un bus 85 d'adresses et de données qui transporte également un signal d'horloge :

- un microprocesseur 81 (ou CPU) ;
- une mémoire non volatile de type ROM (de l'anglais « Read Only Memory ») 82 comprenant par exemple un programme 820 de type système d'exploitation ;
- une mémoire vive ou RAM (de l'anglais « Random Access Memory ») 83 ;
- un ou plusieurs dispositifs I/O (de l'anglais « Input/Output » ou en français « Entrée/Sortie ») 84, tels que par exemple un clavier, une souris, une webcam ; et
- une alimentation 86.

On observe que le mot « registre » utilisé dans la description des mémoires 83 désigne dans chacune des mémoires mentionnées, aussi bien une zone de mémoire de faible capacité (quelques données binaires) qu'une zone mémoire de grande capacité (permettant de stocker un programme entier ou tout ou partie des données représentatives de données calculées ou à afficher).

A la mise sous tension, le microprocesseur 81 charge et exécute les instructions du programme contenu dans la RAM 83.

La mémoire vive 83 comprend notamment :

- dans un registre 330, le programme de fonctionnement du microprocesseur 81 chargé à la mise sous tension du dispositif 8 ;
- des paramètres 831 de commande du ou des actuateurs haptiques calculés pendant la reproduction de la ou les séquences vidéos.

Les algorithmes mettant en oeuvre les étapes du procédé propres à l'invention et décrits ci-après sont stockés dans la mémoire RAM 83. Selon une variante, le dispositif 8 comprend une carte graphique comprenant un ou plusieurs graphiques GPU (de l'anglais « Graphical processing unit ») associé(s) à une GRAM (de l'anglais « Graphical Random Access Memory »), les paramètres de commande du ou des actuateurs étant alors stockés sur la GRAM. Selon une autre variante, l'alimentation 38 est externe au dispositif 3.

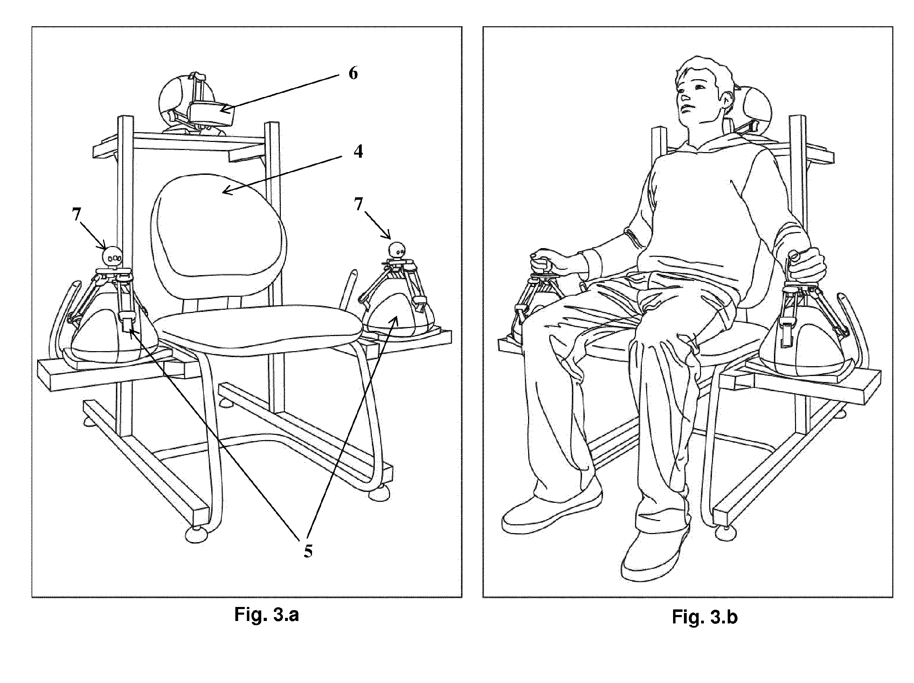

Les **figures 3.a et 3.b** montrent un siège haptique 4 selon un exemple préféré de réalisation. Ce siège comporte une assise et un dossier. Un actuateur de main 5 est placé de chaque coté de l'assise à une position que le spectateur peut facilement empoigner. Un troisième actuateur dit « de tête » 6 est placé à la place d'un repose-tête. L'actuateur de tête 6 comporte un coussin en forme de croissant au creux duquel le spectateur pose sa tête. La position de chacun des actuateurs au niveau du siège 4 est réglage afin de s'adapter à la taille et à la morphologie de chaque spectateur. La **figure 3.b** montre un spectateur assis, ayant dans chaque main le pommeau d'un actuateur 5 et posant la tête sur le coussin du troisième actuateur 6. Les figures 3.a et 3.b ne sont citées qu'à titre d'exemples, les actuateurs peuvent faire bouger des accoudoirs, ou des plateaux sur lesquels le spectateur pose ses pieds, ou tout autre élément en contact avec une partie du corps du spectateur.

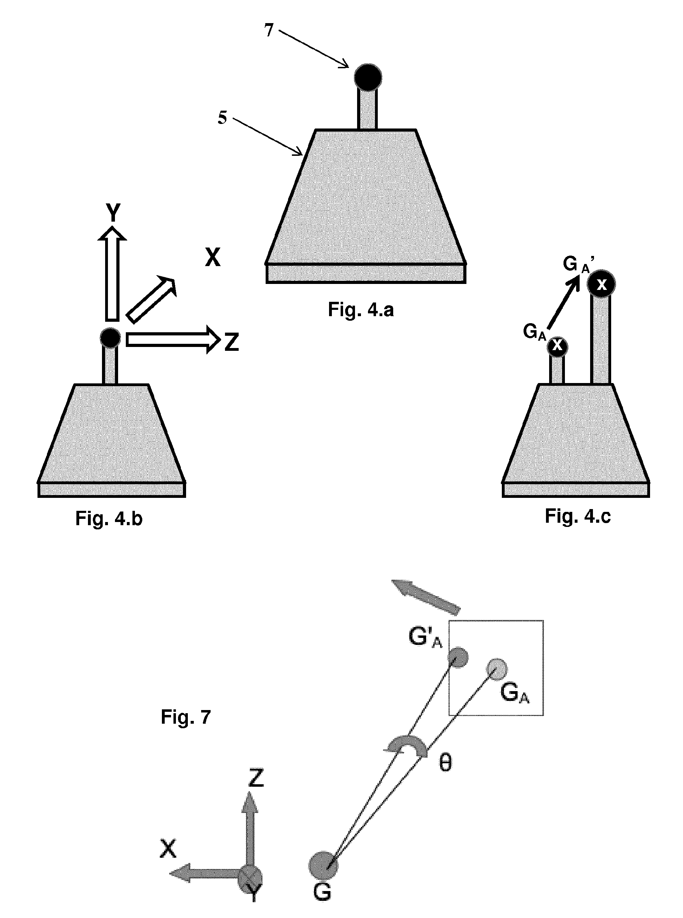

Chaque actuateur haptique 5 et 6 dispose de trois degrés de liberté. Les **figures 4.a, 4.b et 4.c** présentent un schéma d'actuateurs de main et montrent les différents degrés de liberté disponibles. L'actuateur illustré par la **figure 4.a** comporte un corps 7 se rétrécissant vers le haut et un axe vertical 8 sortant du corps en partie verticale. L'axe vertical 8 est surmonté d'un pommeau 9 destiné à être empoigné par le spectateur. L'actuateur comporte des moyens de déplacement de l'axe vertical 8 selon les trois directions orthogonales entre elles classiquement désignées X, Y et Z. En se mettant à la place du spectateur, l'axe 8 peut se déplacer d'avant en arrière en effectuant une translation dans la direction de l'axe Z, de gauche à droite en effectuant une translation dans la direction de l'axe X, et vers le haut ou vers le bas dans la direction de l'axe Y. La **figure 4.b** illustre les trois déplacements possibles de l'axe vertical 8 selon les directions X, Y et Z. La **figure 4.c** illustre un exemple de déplacement où l'axe 8 et son pommeau 9 se déplace dans les trois directions. Soit $G_A$ la position initiale du pommeau et $G_A'$ la position finale du pommeau, le déplacement du pommeau se représente par le vecteur $G_A\,G_A'$.

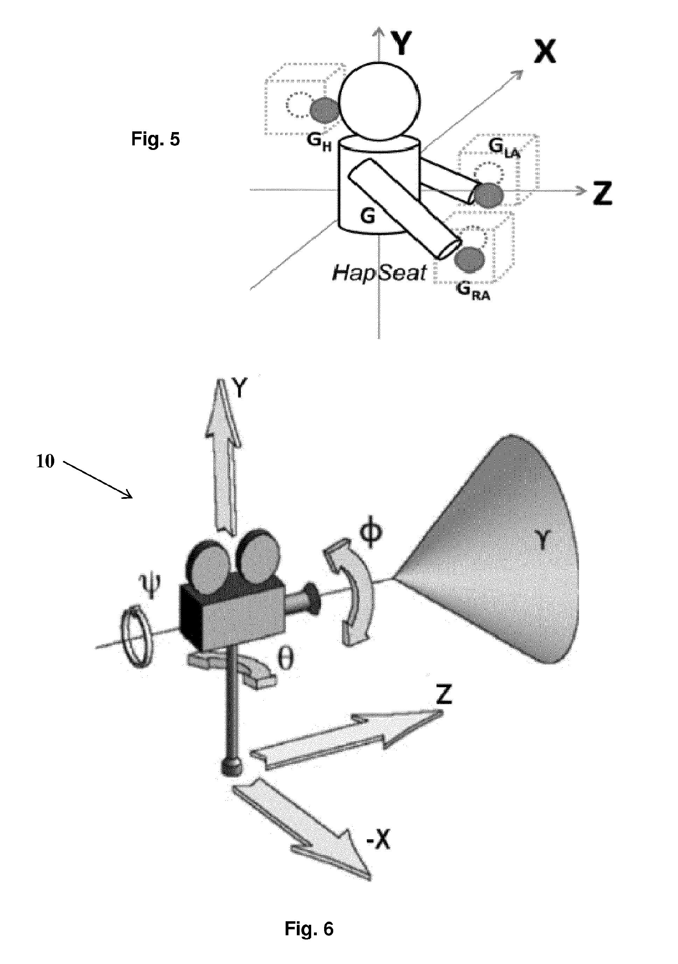

La **figure 5** présente un schéma d'un spectateur posant sa tête contre l'actuateur de tête 6 et tenant deux actuateurs de main 5. Dans le prototype réalisé, les actuateurs de tête et de main sont du même type pour plus de facilités de mise en oeuvre, mais il est possible d'utiliser des actuateurs spécifiques qui sont adaptés à la partie du corps soumis à un mouvement.

Une manière de calculer un paramètre de commandes d'actuateurs haptiques au moins, à partir des commandes appliquées à la caméra, va être maintenant détaillée à l'aide de deux variantes.

*5.3 Calcul des paramètres à l'aide de valeurs de commandes transmises*

La **figure 6** présente un schéma d'une caméra 10 et les possibilités de commandes qui lui sont appliquables lors du tournage et de la prise d'un document vidéo. Le terme « caméra » désigne tout dispositif de capture d'images animées, ce dispositif de capture pouvant être intégré dans un appareil destiné à un autre usage, comme un téléphone portable par exemple. La caméra 10 est placée dans un repère orthogonal définissant trois directions X, Y et Z. Selon cet exemple illustré, la caméra peut être contrôlée par les sept commandes suivantes :

- déplacement x selon l'axe X (vers la gauche ou vers la droite)
- déplacement y selon l'axe Y (vers l'avant ou vers l'arrière)
- déplacement z selon l'axe Z (vers le haut ou vers le bas)
- angle de rotation $\theta$ autour de l'axe Y (orientation de la caméra)
- angle de rotation $\phi$ autour de l'axe X (orientation de la caméra)
- angle de rotation $\varphi$ autour de l'axe Z (orientation de la caméra)
- commande du zoom $\gamma$ de la caméra.

Les commandes appliquées à la caméra 10 sont enregistrées continuellement lors du tournage et associées à une séquence d'une durée déterminée. Ces commandes peuvent être des mesures de capteurs de déplacement (tels que des gyroscopes) mesurant les déplacements et les rotations qu'un opérateur applique manuellement à la caméra. Cette durée déterminée correspond par exemple au temps de reproduction d'une image. Pour un contenu vidéo reproduit avec 24 images par seconde, la durée d'échantillonnage est de 41,66 millisecondes. Chaque image prise à un instant t est associée à un groupe C(t) de valeur de commandes appliquées à la caméra :

$$C(t) = [x_c(t),\ y_c(t),\ z_c(t),\ \phi_c(t),\ \theta_c(t),\ \psi_c(t),\ \gamma_c(t)\ ]$$

Il est possible d'utiliser d'autres durées pour des séquences associées à un groupe de commandes de la caméra. Ces durées sont de préférence multiples de la durée de reproduction d'une image du contenu vidéo. Par exemple, si la durée correspond à la durée de reproduction de 10 images (c'est à dire 416,6 millisecondes), le groupe associé comporte le déplacement total et l'angle total de rotation appliqué à la caméra pendant le tournage de ces dix images. Chaque groupe C(t) de valeurs de commandes est associé à l'ensemble des images d'une séquence du contenu. Le contenu vidéo tel qu'il est transmis à des fins de reproduction comporte notamment les données audiovisuelles associées à une succession de groupes de valeurs de commandes de la caméra.

Le document vidéo ainsi enrichi est transmis par tout moyen vers le lieu de reproduction, dont un exemple est montré à la figure 2. La transmission s'effectue à l'aide d'un support (DVD, Blue-Ray, pellicule cinématographique, ...) ou à l'aide d'un téléchargement via un réseau de communication.

Au moment de la reproduction, le lecteur 1 découpe le contenu audiovisuel en séquences associés à un groupe C(t) de valeurs de commandes appliquées à la caméra, une séquence peut ne contenir qu'une seule image. Puis, le lecteur 1 calcule au moins un paramètre de commandes d'actuateurs haptiques associé à cette séquence. Selon un exemple préféré de réalisation, le lecteur commande trois actuateurs disposant chacun de trois degrés de liberté. A tout moment, un actuateur peut se représenter par un vecteur représentant la position dans l'espace du pommeau par rapport à la base de l'actuateur. Soit le point $G_A$ à un instant donné c du centre du pommeau 9, et le point $G_A$' à l'instant suivant t+1, la commande pour contrôler un actuateur A à un instant donné consiste à calculer les coordonnées du vecteur

$\overrightarrow{G_A G'_A}$ en utilisant l'équation suivante :

$$\overrightarrow{G_A G'_A} = f(\vec{T}, \vec{R}, \vec{F})$$

où :

$$f(\vec{T}, \vec{R}, \vec{F}) = \frac{T\|T\| + R\|R\| + F\|F\|}{\|T\| + \|R\| + \|F\|}$$

Les vecteurs $\vec{T}$, $\vec{R}$, $\vec{F}$ représentent respectivement une translation, une rotation et un zoom de l'image. Les vecteurs $\vec{T}$, $\vec{R}$, $\vec{F}$ sont définis par les équations suivantes :

$$\vec{T} = \begin{bmatrix} k_x & 0 & 0 \\ 0 & k_y & 0 \\ 0 & 0 & k_z \end{bmatrix} \begin{bmatrix} x_c \\ y_c \\ z_c \end{bmatrix}$$

$$\vec{R} = \left(R_x(m_x\varphi_c)R_y(m_y\theta_c)R_z(m_z\psi_c) - I_3\right)\overrightarrow{GG'_A}$$

$$\vec{F} = \begin{bmatrix} 0 & 0 & 0 \\ 0 & 0 & 0 \\ 0 & 0 & s_z \end{bmatrix} \begin{bmatrix} 0 \\ 0 \\ \gamma_c \end{bmatrix}$$

Comme on peut le constater dans l'équation ci-dessus, le vecteur $\vec{T}$ dépend des trois valeurs $x_c$, $y_c$ et $z_c$ appliquées à la caméra lors du tournage du contenu vidéo à un instant t. Le vecteur $\vec{R}$, dépend des trois rotations possibles $\theta_c$, $\phi_c$ et $\varphi_c$ de la caméra à un instant donné t et le zoom $\gamma_c$ se traduit par une translation F vers l'avant (zoom avant) ou vers l'arrière (zoom arrière) à un instant donné t. Rx, Ry et Rz sont des matrices 3D autour des axes x, y et z de la caméra, et $I_3$ est la matrice identité de $R^3$.

Les équations ci-dessus ne sont données qu'à titre d'exemple de réalisation, elles définissent le mouvement de l'actuateur en fonction du mouvement effectué par la caméra lors du tournage. L'équation décrivant la fonction R est particulière dans le sens où elle transforme une rotation de la caméra en une translation appliquée à l'axe vertical de l'actuateur. Cette transformation est liée à la position de l'actuateur dans l'espace. Le mouvement est différent pour chaque actuateur.

La **figure 7** illustre un mouvement de l'actuateur haptique lors d'une séquence dans laquelle la caméra effectue une rotation. Dans cette figure, le schéma est vue de dessus de la figure 6 (seul un actuateur est représenté, celui de droite). Soit G un point situé sur l'utilisateur, par exemple le milieu de son torse. La position G'$_A$ est déterminé par une rotation du point G$_A$ autour du point G. Il est ensuite possible de calculer le vecteur $\overrightarrow{G_A G'_A}$.

Par exemple, si la caméra effectue un mouvement de rotation $\theta$ autour de l'axe Y, l'équation de C devient : C(t) = [0, 0, 0, 0, $\theta$ (t), 0, 0].

Les calculs de vecteurs sont :

$$\overrightarrow{GG'_A} = R_y(\theta_c)\overrightarrow{GG_A}$$

$$\overrightarrow{G_A G'_A} = \overrightarrow{GG'_A} - \overrightarrow{GG_A} = \left(R_y(\theta_c) - I_3\right)\overrightarrow{GG_A}$$

Le principe est généralisé pour toutes les rotations dans les précédentes équations du vecteur $\vec{R}$.

Les valeurs k, m et s sont des facteurs de réduction permettant que la position calculée pour chaque axe vertical 8 ne sorte pas de son espace de travail au sein de l'actuateur.

Par exemple, supposons que la caméra fasse un mouvement de 2 mètres vers l'avant, ce qui se traduit numériquement par z = 2m, l'équation C prend alors les valeurs suivantes.

C(t) = [0, 0, 2, 0, 0, 0, 0 ]

Dans le prototype réalisé, l'espace de travail d'un axe vertical est représenté par un cube de 10cm (0,1m). L'actuateur peut se déplacer de -0,05 à +0,05m sur un axe. Ainsi le mouvement de caméra se traduit par un déplacement vers l'avant de l'actuateur de 0,05 cm. Dans cet exemple Kz = 0,025 et l'équation du vecteur $\overrightarrow{G_A G'_A}$ devient :

$$\overrightarrow{G_A G'_A} = \begin{bmatrix} 0 & 0 & 0 \\ 0 & 0 & 0 \\ 0 & 0 & 0,025 \end{bmatrix}\begin{bmatrix} 0 \\ 0 \\ 2 \end{bmatrix} = \begin{bmatrix} 0 \\ 0 \\ 0,05 \end{bmatrix}$$

On constate que les vecteurs $\vec{R}$, et $\vec{F}$ sont nuls dans cet exemple, le mouvement haptique se traduit uniquement par une translation.

Si la même valeur de commande est appliquée à la caméra au cours d'une durée déterminé, cette durée constitue une séquence complète au cours de laquelle l'amplitude maximale du mouvement de la caméra est prise en compte pour calculer le facteur k.

Les autres facteurs m, s sont calculés de la même façon.

Les vecteurs T, R et F permettent de commander les trois degrés de liberté de chaque actuateur. Par exemple, lorsque la caméra effectue une rotation vers la droite, alors l'actuateur de main droite avance, l'actuateur de la main gauche recule et l'actuateur de tête pivote légèrement vers la droite.

Le lecteur 1 tout en envoyant les signaux vidéo à l'écran 2 et audio aux enceintes 3, calculent les paramètres de commandes d'actuateurs et les transmet en temps réel. L'ensemble des signaux (vidéo, audio et paramètres de commandes haptiques) sont émis de façon synchrone de façon que les mouvements générés par les actuateurs correspondent aux images et au sons de la séquence associée.

*5.4 Calcul des paramètres en déterminant des effets cinématographiques*

Une variante de réalisation de la présente invention consiste à analyser les commandes appliquées à la caméra au cours d'une séquence ou d'un groupe de séquences afin de déterminer un effet cinématographique au cours de cette séquence et à appliquer aux différents actuateurs haptiques des paramètres de commandes correspondant à cet effet.

Voici un exemple d'une liste d'effets cinématographiques détectables par l'analyse des commandes appliquées à la caméra lors du tournage :

• « rotation autour de personnages ».

Cet effet appelé « arcing » en langue anglo-saxonne, consiste à tourner autour des personnages pour donner de l'importance à ces personnages une scène. La métaphore haptique consiste à rapprocher les pommeaux des deux actuateurs de main pour donner l'impression que le spectateur se concentre.

• « <u>travelling arrière en montant</u> ».

Cet effet appelé « crane shot » en langue anglo-saxonne, consiste à faire reculer la caméra tout en l'élevant au-dessus de la scène, cet effet est souvent utilisé à la fin d'un film pour donner un sentiment de recul et d'envol sur l'objet filmé. La métaphore haptique consiste à donner des petits basculements aux actuateurs pour simuler un mouvement d'aile permettant au spectateur de s'envoler.

• « <u>image légèrement penché sur la gauche</u> ».

Cet effet appelé « dutch angle » en langue anglo-saxonne, consiste à filmer une scène en penchant légèrement la caméra vers la gauche pour observer bizarrement un personnage et le faire apparaître comme inquiétant. La métaphore haptique consiste à balancer les pommeaux des deux actuateurs de main de gauche à droite, en alternance pour déstabiliser le spectateur et lui donner un sentiment d'inquiétude.

• « <u>travelling</u> ».

Cet effet consiste à filmer une scène en effectuant une déplacement latéral, pour montrer un paysage ou pour suivre un personnage qui se déplace. La métaphore haptique consiste à simuler une avance en crabe, c'est à dire à écarter rapidement la main droite, puis à écarter rapidement la main gauche tout en ramenant lentement la main droite dans sa position initiale, puis à écarter rapidement la main droite tout en ramenant lentement la main gauche, et ainsi de suite.

• « <u>plongée et contre-plongée</u> ».

Cet effet appelé « tilting » en langue anglo-saxonne, consiste à filmer un personnage soit sur le dessus, soit par en dessous. Une prise de vue en plongée provoque un effet d'écrasement. Elle peut être utilisée, entre autres, pour exprimer le point de vue d'un personnage ou pour ramener le sujet à un état de détail dans le plan. Une prise de vue en contre-plongée peut être utilisée pour accroître l'importance du sujet dans le plan et donner au spectateur une impression de petitesse. En fonction du sujet, la contre-plongée peut être associée à un point de vue "naturel" : si on filme la tour Eiffel en contre-plongée, on adopte un point de vue à échelle humaine. La métaphore haptique consiste à ramener vers le bas les trois actuateurs, les mains et la tête basculant vers l'avant.

• « <u>Vertigo</u> ».

Cet effet est appelé ainsi car il fût utilisé dans le film « Vertigo» par Alfred Hitchcock. Cet effet consiste à donner l'impression de vertige au spectateur. La caméra avance tout en effectuant un zoom arrière, l'objet filmé au centre de l'image ne change quasiment pas d'aspect à l'inverse de son entourage. La métaphore haptique consiste à écarter les pommeaux donnant un effet bizarre d'ouverture au spectateur.

• « <u>zoom</u> ».

Cet effet est le zoom classique, c'est à dire un travelling en avant. La métaphore haptique consiste à imiter une marche en avançant l'un après l'autre les pommeaux des deux actuateurs de main.

Pour chaque séquence du contenu vidéo, le lecteur détecte au plus un effet cinématographique. Si un même effet est présent dans plusieurs séquences consécutives, alors ces séquences sont regroupées en un ensemble et le lecteur émet pendant la reproduction de cet ensemble de séquence les paramètres de commandes d'actuateurs correspondant à la métaphore haptique associée à cet effet cinématographique.

Selon un perfectionnement, si aucun effet cinématographique n'est détecté au cours d'une séquence, alors le programme applique les équations décrites dans la première variantes et calcule les paramètres de commandes d'actuateurs haptiques associé à cette séquence en utilisant directement les commandes appliquées à la caméra lors du tournage de cette séquence.

Selon un perfectionnement, le lecteur 1 détecte l'amplitude de l'effet cinématographique sur le spectateur, et pondère la valeur des paramètres générant la métaphore haptique, en amplitude et, si le mouvement est cyclique, la fréquence du mouvement appliqué au spectateur.

L'amplitude d'un effet cinématographique peut être déduit des valeurs de commandes appliquées pour régler la caméra lors du tournage. Prenons par exemple un effet de contre-plongée (rotation $\phi$ autour de l'axe X) qui se traduit par :

C(t) = [0, 0, 0, $\phi$ (t), 0, 0, 0 ]

L'angle de contreplongée détermine l'amplitude de l'effet cinématographique et cette amplitude devient un coefficient pour la commande du rendu haptique. Un effet C1 sera plus important qu'un effet C2 si $\phi_1(t) > \phi_2(t)$.

Cette information peut être ensuite utilisée pour moduler la puissance de l'effet cinématographique.

Selon un autre exemple, la commande suivante est associée pour déterminer le rendu haptique de la contre-plongée, c'est à dire le vecteur :

$$\overrightarrow{G_A G'_A} = \begin{bmatrix} 0 & 0 & 0 \\ 0 & k_y & 0 \\ 0 & 0 & 0 \end{bmatrix} \begin{bmatrix} 0 \\ \phi \\ 0 \end{bmatrix}$$

(l'angle de rotation déplace l'actuateur A sur l'axe Y),

Dans ce cas, l'effet haptique pour C1 sera automatiquement plus important que pour C2.

Selon un perfectionnement appliqué aux deux variantes précédemment décrites, le fournisseur de contenu calcule au préalable les paramètres de commandes d'actuateurs et les associe aux séquences du contenu vidéo. De cette manière, le calcul n'est effectué qu'une seule fois et les lecteurs 1 chargés de reproduire le contenu n'ont pas besoin d'effectuer ce traitement. Ce perfectionnement est utilisable si le fournisseur de contenu connaît les caractéristiques des actuateurs utilisés lors de la reproduction et leurs positions au niveau des spectateurs. Si les pièces dédiées à la reproduction d'un contenu enrichi possèdent des modèles d'actuateurs différents, alors le document vidéo peut contenir différents jeux de paramètres de commandes d'actuateurs, le lecteur récupérant celui qui lui est destiné lors de la reproduction.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier aux modes de réalisation précédemment décrits, sans pour autant sortir du cadre de la présente invention.

Les modes de réalisation décrits précédemment sont par exemple mis en oeuvre dans une méthode ou un processus, un appareil, un programme logiciel, un flux de données ou un signal. Un dispositif ou appareil mettant en oeuvre la méthode d'interpolation décrite est par exemple sous la forme de composants matériels programmables ou non, sous la forme d'un ou plusieurs processeur (avantageusement de type GPU mais également de type CPU ou ARM selon des variantes). Les méthodes décrites sont mises en oeuvre par exemple dans un appareil comprenant au moins un processeur, qui se réfère à des dispositifs de traitement en général, comprenant par exemple un ordinateur, un microprocesseur, un circuit intégré ou un dispositif logique programmable. Les processeurs comprennent également les dispositifs de communication, tels que par exemple les ordinateurs, les téléphones portables ou cellulaires, les téléphones intelligents (de l'anglais « smartphones »), les assistants numériques portables/personnes (dits « PDAs »), les tablettes numériques ou tout autre dispositif permettant la communication d'information entre utilisateur.

Les mises en oeuvre des différents processus et différentes caractéristiques décrits précédemment peuvent être mis en oeuvre dans différents équipements ou applications, par exemple notamment dans un équipement ou des applications associés au codage de données, au décodage de données, à la génération de vue ou d'image, au traitement de texture, et tout autre traitement d'images, d'informations représentative de texture et/ou d'informations représentatives de profondeur. Des exemples d'un tel équipement sont un encodeur, un décodeur, un post-processeur traitant les sorties d'un décodeur, un préprocesseur fournissant des entrées à un encodeur, un codeur vidéo, un décodeur vidéo, un codec vidéo, un serveur web, un récepteur/décodeur, un ordinateur portable, un ordinateur personnel, un téléphone portable, un PDA, une tablette numérique et tout autre dispositif de communication. L'équipement peut être mobile ou embarqué dans un véhicule mobile.

De plus, les méthodes décrites peuvent être mises en oeuvre sous la forme d'instructions exécutées par un ou plusieurs processeurs, et de telles instructions peuvent être stockées sur un support lisible par un processeur ou un ordinateur, tel que par exemple un circuit intégré, tout dispositif de stockage tel qu'un disque dur, un disque optique (CD ou DVD), une mémoire à accès aléatoire RAM, une mémoire non volatile de type ROM. Les instructions forment par exemple un programme applicatif stocké dans un support lisible par un processeur. Les instructions prennent par exemple la forme d'un hardware, d'un firmware (ou logiciel embarqué en français) ou d'un software (ou logiciel en français).

**Revendications**

1. Procédé de reproduction d'au moins une séquence d'un contenu vidéo filmé à partir d'une caméra (10), **caractérisé en ce qu'il** comporte les étapes de :

   - traitement (1.4) des commandes appliquées à la caméra lors du tournage de la au moins une séquence afin de calculer au moins un paramètre de commandes d'au moins un actuateur haptique (5,6) associé à ladite au moins une séquence et,
   - contrôle (1.6) dudit au moins un actuateur haptique (5,6) à partir du au moins un paramètre de commandes calculé pendant la reproduction (1.5) de la au moins une séquence.

2. Procédé de reproduction d'un contenu selon la revendication 1, **caractérisé en ce que** les valeurs numériques des commandes appliquées à la caméra produisent des valeurs numériques commandant le au moins un actuateur haptique (5,6).

3. Procédé de reproduction d'un contenu selon la revendication 1, **caractérisé en ce qu'il** comporte une étape de détermination d'un effet cinématographique à partir des commandes appliquées à la caméra (10), le paramètre de commandes du au moins un actuateur haptique (5,6) étant calculé à partir de l'effet cinématographique déterminé.

4. Procédé de reproduction d'un contenu selon l'une quelconque des revendications précédentes, **caractérisé en ce qu'il** comporte une étape de transmission du contenu vidéo et des valeurs de commandes appliquées à la caméra (10) au cours de ladite au moins une séquence vers un dispositif de reproduction de contenu vidéo et de commande du au moins un actuateur haptique, l'étape de traitement pour calculer les paramètres de commandes du au moins un actuateur haptique étant exécutée par ce dispositif.

5. Procédé de reproduction d'un contenu selon l'une quelconque des revendications 1 à 3, **caractérisé en ce qu'il** comporte une étape de transmission du contenu vidéo et des paramètres de commandes du au moins un actuateur haptique vers un dispositif de reproduction de contenu vidéo et de commande du au moins un actuateur haptique.

6. Procédé de reproduction d'un contenu selon la revendication 5, **caractérisé en ce qu'**une pluralité de groupes de paramètres de commandes du au moins un actuateur haptique sont associés à ladite au moins une séquence, chaque groupe de paramètres étant associé à un dispositif de reproduction de contenu vidéo et d'actuateurs haptiques particuliers.

7. Procédé de reproduction d'un contenu selon l'une quelconque des revendications précédentes, **caractérisé en ce que** les actuateurs sont au nombre de trois, deux actuateurs destinés à être empoignés dans chaque main par un spectateur, et un actuateur destiné à supporter la tête dudit spectateur.

8. Procédé de reproduction d'un contenu selon l'une quelconque des revendications précédentes sous la dépendance de la revendication 3, **caractérisé en ce que** si aucun effet cinématographique n'est détecté au cours d'une séquence, alors les paramètres de commandes du au moins un actuateur haptique associé à ladite au moins une séquence sont calculés à partir des valeurs de commandes appliquées à la caméra lors du tournage de ladite au moins une séquence.

9. Dispositif (1) de reproduction d'au moins une séquence d'un contenu vidéo filmé à partir d'une caméra (10), **caractérisé en ce que** ledit dispositif comprend au moins un processeur configuré pour :

   - traiter des commandes appliquées à la caméra lors du tournage de la au moins une séquence afin de calculer au moins un paramètre de commandes d'au moins un actuateur haptique (5,6) associé à ladite au moins une séquence,
   - contrôler ledit au moins un actuateur haptique à partir du au moins un paramètre de commandes calculé pendant la reproduction de la au moins une séquence.

10. Dispositif selon la revendication 9, où le au moins un processeur est en outre configuré pour déterminer un effet cinématographique à partir des commandes appliquées à la caméra (10), le paramètre de commandes du au moins un actuateur haptique étant calculé à partir de l'effet cinématographique déterminé.

11. Dispositif selon l'une des revendications 9 et 10, où le au moins processeur est configuré pour contrôler trois actuateurs haptiques, deux actuateurs étant destinés à être empoignés dans chaque main par un spectateur, et un actuateur étant destiné à supporter la tête dudit spectateur.

12. Programme d'ordinateur comportant des instructions pour la mise en oeuvre du procédé de traitement de contenu vidéo décrit selon l'une quelconque des revendications 1 à 8, lorsque le programme est exécuté par un processeur.

Fig. 1

Fig. 2

Fig. 3.b

Fig. 3.a

7

5

Y

X

Z

Fig. 4.a

Fig. 4.b

G$_A$'

G$_A$

Fig. 4.c

Fig. 7

Z

X

Y

G'$_A$

G$_A$

θ

G

Fig. 5

Fig. 6

Fig 8

Europäisches
Patentamt

European
Patent Office

Office européen
des brevets

**RAPPORT DE RECHERCHE EUROPEENNE**

Numéro de la demande

EP 13 30 5980

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/028542 A1 (RONDINELLI MICHAEL [US] ET AL) 9 février 2006 (2006-02-09) * alinéas [0025], [0026], [0030], [0032], [0033], [0043]-[0045] * ----- | 1-12 | INV. A63G25/00 A63G31/16 |
| A | US 2005/168021 A1 (REAL JAMES K [US] ET AL) 4 août 2005 (2005-08-04) * alinéas [0014], [0016]; figure 1 * ----- | 7,11 | |
| A | WO 2012/116433 A1 (D BOX TECHNOLOGIES INC [CA]; MENARD JEAN-FRANCOIS [CA]; TROTTIER SYLVA) 7 septembre 2012 (2012-09-07) * figure 3 * ----- | 1-12 | |
| A | US 3 469 837 A (HEILIG MORTON L) 30 septembre 1969 (1969-09-30) * le document en entier * ----- | 1-12 | |
| A | US 2002/115043 A1 (BAKER EDWARD-BRUCE [US] ET AL) 22 août 2002 (2002-08-22) * le document en entier * ----- | 1-12 | |

DOMAINES TECHNIQUES RECHERCHES (IPC)

A63J
A63G

Le présent rapport a été établi pour toutes les revendications

| Lieu de la recherche | Date d'achèvement de la recherche | Examinateur |
|---|---|---|
| Munich | 15 novembre 2013 | Turmo, Robert |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 30 5980

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-11-2013

| Document brevet cité au rapport de recherche | Date de publication | Membre(s) de la famille de brevet(s) | Date de publication |
|---|---|---|---|
| US 2006028542 A1 | 09-02-2006 | AUCUN | |
| US 2005168021 A1 | 04-08-2005 | CN 1913803 A | 14-02-2007 |
| | | EP 1711087 A1 | 18-10-2006 |
| | | JP 2007520320 A | 26-07-2007 |
| | | US 2005168021 A1 | 04-08-2005 |
| | | US 2006284459 A1 | 21-12-2006 |
| | | WO 2005074753 A1 | 18-08-2005 |
| WO 2012116433 A1 | 07-09-2012 | US 2012239200 A1 | 20-09-2012 |
| | | WO 2012116433 A1 | 07-09-2012 |
| US 3469837 A | 30-09-1969 | AUCUN | |
| US 2002115043 A1 | 22-08-2002 | AUCUN | |

EPO FORM P0460

Pour tout renseignement concernant cette annexe : voir Journal Officiel de l'Office européen des brevets, No.12/82